# EUROPÄISCHE PATENTANMELDUNG

(11) **EP 1 500 836 A1**
(43) Veröffentlichungstag der Anmeldung: **26.01.2005**
(21) Anmeldenummer: 04010266.7
(22) Anmeldetag: 30.04.2004
(51) Int. Cl.: F16D 3/84

(54) **Abdichtanordnung eines Längenausgleichs einer Kreuzgelenkwelle**

(30) Priorität: 21.07.2003 DE 10333231
(71) Anmelder: Spicer Gelenkwellenbau GmbH & Co. KG, 45143 Essen (DE)
(72) Erfinder: Müller, Erhard, 45529 Hattingen (DE); Meineke, Manfred, 58454 Witten (DE); Schultze, Hans-Jürgen, 46240 Bottrop (DE)
(74) Vertreter: Harwardt, Günther, Dipl.-Ing.

(57) **Zusammenfassung**

Die Erfindung betrifft eine Abdichtanordnung eines Längenausgleichs 7 einer Kreuzgelenkwelle, welcher ein rohrförmiges erstes Wellenelement 8 und ein zweites Wellenelement 10, das im ersten Wellenelement 8 drehfest und entlang einer Längsachse 6 verstellbar aufgenommen ist, umfasst, wobei an eines der beiden Wellenelemente eine Sitzfläche 11 angeschlossen ist, die auf der Längsachse 6 zentriert ist. Anschließend an diese ist eine Umfangsnut 16 um die Längsachse 6 angeordnet. Es ist eine innen zylindrische Dichthülse 12 aus einem Kunststoff mit Formgedächtnis vorgesehen, die ein Befestigungsende 13 aufweist, mit dem sie auf der Sitzfläche 11 aufgenommen ist. Sie weist einen nach innen auf die Längsachse 6 verformbaren Befestigungsabschnitt 15 auf, der in die Umfangsnut 16 eingreifend verformt ist.

## Beschreibung

Die Erfindung betrifft eine Abdichtanordnung eines Längenausgleichs einer Kreuzgelenkwelle, welche ein rohrförmiges erstes Wellenelement und ein zweites Wellenelement, das im ersten Wellenelement drehfest und entlang einer Längsachse verstellbar aufgenommen ist, aufweist, wobei an eines der beiden Wellenelemente eine Sitzfläche angeschlossen ist, die auf der Längsachse zentriert ist und eine innen zylindrische Dichthülse, die auf der Sitzfläche aufgenommen ist, und Befestigungsmittel zur Fixierung der Dichthülse an dem die Sitzfläche aufweisenden Wellenelement vorgesehen sind.

Die US-PS 1 496 236 beschreibt einen Längenausgleich im allgemeinen und insbesondere einen Längenausgleich einer Kreuzgelenkwelle mit einem rohrförmigen ersten Wellenelement und einem zweiten Wellenelement, das im ersten Wellenelement aufgenommen ist. Das zweite Wellenelement ist im ersten Wellenelement über eine Verzahnung drehfest aufgenommen und kann entlang einer Längsachse relativ zum ersten Wellenelement eine Axialverstellung ausführen. Das zweite Wellenelement bildet eine kreiszylindrische Sitzfläche für das Befestigungsende einer Dichthülse aus Metall. Das zweite Wellenelement weist im Anschluss an die Sitzfläche eine Umfangsnut auf, in die ein radial auf die Längsachse zu verformter Befestigungsabschnitt am Befestigungsende der Dichthülse eingreift, so dass die Dichthülse axial festgelegt ist. An ihrem freien Ende weist die Dichthülse einen nach innen gerichteten Kragen auf. Ferner weist sie ein Gewinde auf, auf welches eine weitere Hülse aufgeschraubt ist, die eine Dichtung aufnimmt. Diese Dichtung dient zur Abdichtung gegenüber der Außenfläche des rohrförmigen ersten Wellenelements.

Diese Druckschrift beschreibt auch eine weitere Ausführungsform, bei der die Dichthülse einem Ring zugeordnet ist, der auf einer Sitzfläche des zweiten Wellenelementes aufgepresst ist. Bei beiden Ausführungsformen ist die Montage aufwendig. Bei der ersten Ausführungsform muss der Befestigungsabschnitt durch ein Werkzeug in die Umfangsnut des zweiten Wellenelementes eingerollt werden. Im zweiten Fall ist ein Aufpressen erforderlich, wobei die Oberfläche des zweiten Wellenelementes beschädigt werden kann.

Von Nachteil ist bei beiden, dass eine relativ hohe Masse bewegt werden muss und darüber hinaus eine relativ lange Stützfläche erforderlich ist, um die Dichthülse so zu führen, dass ein einigermaßen zufriedenstellender Rundlauf gegeben ist. Die vorgesehene, relativ lange Sitzfläche verkürzt die Längenausgleichsmöglichkeit, so dass der axiale Bauraum nicht optimal genutzt wird.

Der Erfindung liegt die Aufgabe zugrunde, eine Abdichtanordnung zu schaffen, die nur geringe Unwuchten bei schnellrotierenden Gelenkwellen erzeugt und darüber hinaus eine einfache Montage der Dichthülse erlaubt.

Erfindungsgemäß wird diese Aufgabe dadurch gelöst, dass die Befestigungsmittel mindestens eine im Bereich der Sitzfläche oder anschließend an diese angeordnete Umfangsnut, die um die Längsachse angeordnet ist und/oder eine an der Sitzfläche vorgesehene rauhe Oberfläche umfassen,
dass die innen zylindrische Dichthülse aus einem Kunststoff mit Formgedächtnis besteht, die ein Befestigungsende aufweist, mit dem sie auf der Sitzfläche aufgenommen ist und dass die Dichthülse eine nach innen auf die Längsachse verformbaren Befestigungsabschnitt aufweist, der in die Umfangsnut eingreifend oder einen Reibschluss mit der eine rauhe Oberfläche aufweisenden Sitzfläche erzeugend verformt ist.

Von Vorteil bei dieser Ausbildung ist, dass die Dichthülse aus einem leichten Werkstoff, nämlich Kunststoff, hergestellt ist und mit Ausnahme der spanlosen Verformung vor der Montage keiner weiteren Bearbeitung selbst bedarf. Sie kann von einem serienmäßig hergestellten Rohr hergestellt werden. Ihr Befestigungsabschnitt wird vorbereitend zur Montage auf der Sitzfläche aufgeweitet, so dass der aufgeweitete Bereich einfach über die Sitzfläche schiebbar ist, auch wenn diese beispielsweise eine entsprechend aufgerauhte Oberfläche aufweist, so dass der Befestigungsabschnitt längenmäßig dem Befestigungsende entspricht. Sinnvoll ist es, die Aufweitung nur so weit vorzunehmen bzw. das Übermaß so festzulegen, dass noch eine Führung gegeben ist. Durch die anschließende Rücküberführung auf das Fertigungsendmaß aufgrund des Formgedächtnisses erfolgt dann das feste und dichte Festlegen entweder durch Eingriff des Befestigungsabschnittes in die zugehörige, mindestens eine Umfangsnut und/oder aber dadurch, dass dieser sich eng an die rauhe Sitzfläche anlegt, so dass ein Reibschluss mit einer hohen Haltewirkung erzielt wird. Von Vorteil dabei ist, dass recht gute Rundlaufeigenschaften erzeugt werden können und keine spanende Bearbeitung an der Dichthülse erforderlich ist, so dass auch keine Schwächung des Bauteils eintritt. Dabei kann, wenn mindestens eine Umfangsnut vorgesehen ist, diese im Anschluss an die Sitzfläche vorgesehen sein. Es ist jedoch auch möglich, die mindestens eine Umfangsnut in den Bereich der Sitzfläche zu verlegen.

In Ausgestaltung der Erfindung ist vorgesehen, dass die rauhe Oberfläche im Bereich der Sitzfläche durch Rillen, Kerben, ein Gewinde oder eine Rändelung dargestellt ist. Dadurch, dass der Befestigungsabschnitt in seine Ursprungsform aufgrund des Formgedächtnisses zurückkehrt, wird ein intensiver Reibschluss mit der rauhen Oberfläche erzielt. Das Grundmaterial der Dichthülse passt sich im Bereich des Befestigungsabschnittes der rauhen Oberfläche an, ohne dass jedoch eine Kerbwirkung oder Einschneidwirkung erzielt wird. Grundsätzlich ist es möglich, dass der Befestigungsabschnitt der Dichthülse mit dem Abschnitt des Befestigungsendes übereinstimmt, der auf der Sitzfläche sitzt. Es ist jedoch auch möglich, wenn eine Umfangsnut im Anschluss an die Sitzfläche vorgesehen ist, den Befestigungsabschnitt sich nur über den Axialbereich der Dichthülse am Befestigungsende erstrecken zu lassen, der der Umfangsnut gegenüberliegt. Günstig ist jedoch, das Befestigungsende insgesamt so auszulegen, dass dieses insgesamt zunächst mit einem Übermaß versehen wird, um auch im Bereich der Sitzfläche ein enges Anlegen über die eigentliche Führungsfunktion hinaus zu erzielen.

Vorzugsweise ist vorgesehen, dass der Befestigungsabschnitt mittels Wärmeeinwirkung auf seinen ursprünglichen Fertigungszustand gebracht ist.

Zur Lösung der Aufgabe ist auch ein Verfahren zur Herstellung einer Abdichtanordnung vorgesehen, welches dadurch gekennzeichnet ist, dass eine Dichthülse aus einem Kunststoff mit Formgedächtnis auf Endmaß hergestellt wird, dass danach der Befestigungsabschnitt spanlos auf Übermaß gebracht wird, dass danach die Dichthülse mit ihrem Befestigungsende auf die Sitzfläche geschoben und anschließend der Befestigungsabschnitt einer Wärmebehandlung unterworfen wird.

Dabei ist es möglich, dass die Wärmebehandlung durch Einwirken von Licht und Ultraschall oder durch einen Induktor erfolgt.

Bevorzugte Ausführungsbeispiele der Erfindung sind in der Zeichnung schematisch dargestellt und anhand derselben erläutert. Dies gilt auch für das Verfahren.

Es zeigt
- Figur 1: eine Seitenansicht einer Kreuzgelenkwelle mit einem Längenausgleich entsprechend der Erfindung, halb geschnitten, halb in Ansicht,
- Figur 2: das Detail Z bezüglich der Anordnung der Dichthülse auf der Sitzfläche im vergrößerten Maßstab,
- Figuren 3 bis 7: verschiedene Ausführungsbeispiele für die Gestaltung der Sitzflä che des zweiten Wellenelementes.

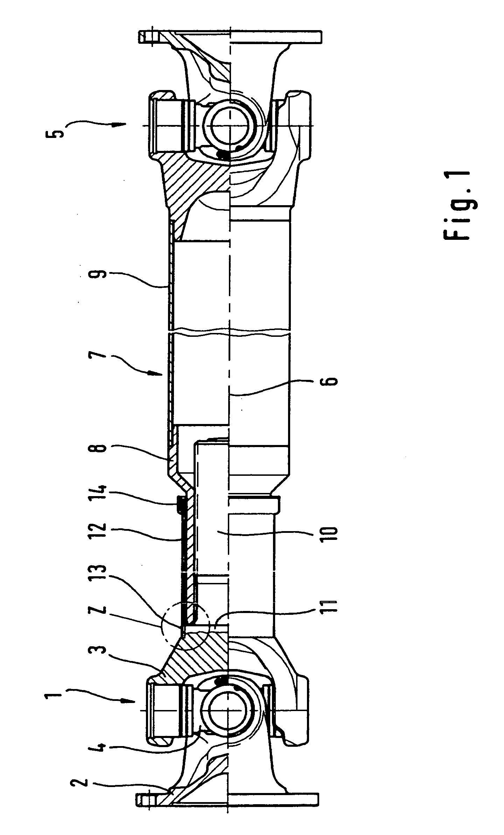

Figur 1 zeigt eine Kreuzgelenkwelle mit einem ersten Kreuzgelenk 1, das eine erste Gelenkgabel 2, eine zweite Gelenkgabel 3 und ein beide gelenkig miteinander verbindendes Zapfenkreuz 4 umfasst. An dem anderen Ende der Kreuzgelenkwelle ist ein zweites Kreuzgelenk 5 angebracht, das entsprechend dem ersten Kreuzgelenk 1 gestaltet ist. Die beiden Kreuzgelenke 1, 5 sind durch einen Längenausgleich 7 miteinander verbunden. Sämtliche Bauteile der Kreuzgelenkwelle sind auf der Längsachse 6 zentriert dargestellt, d.h. die beiden Kreuzgelenke 1, 5 befinden sich in der gestreckten Lage.

Der Längenausgleich 7 umfasst ein rohrförmiges erstes Wellenelement, das über ein Verbindungsrohr 9 mit dem zweiten Kreuzgelenk 5 fest verbunden ist. Die Bohrung des ersten Wellenelementes 8 weist eine Längsverzahnung auf, deren Zähne parallel zur Längsachse 6 verlaufen und um die Längsachse 6 verteilt in der Bohrung angeordnet sind. In der Bohrung des ersten Wellenelements 8 ist ein zweites Wellenelement 10, das mit einer zu der Verzahnung des ersten Wellenelementes 8 passenden Verzahnung ist, derart aufgenommen, das zwischen beiden eine Drehmomentübertragung möglich ist und das erste Wellenelement 8 und das zweite Wellenelement 10 relativ zueinander entlang der Längsachse verstellbar sind.

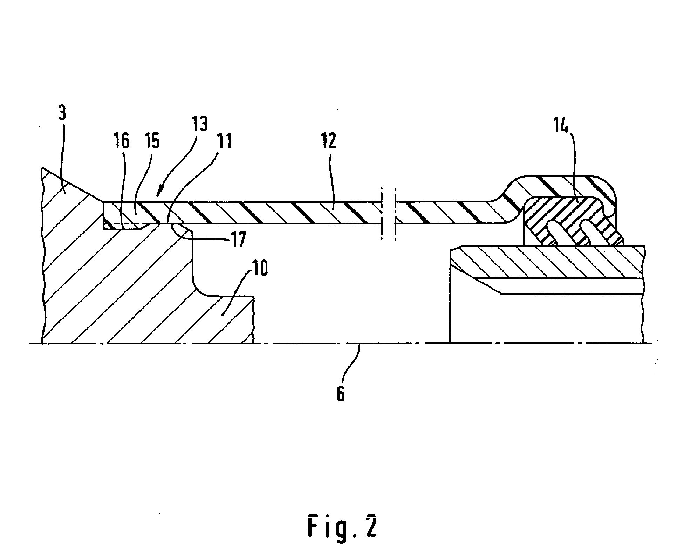

Das zweite Wellenelement 10 ist beim vorliegenden Ausführungsbeispiel einstückig mit der zweiten Gelenkgabel 3 des ersten Kreuzgelenkes 1 verbunden. Es kann jedoch auch mit diesem beispielsweise durch Schweißen unslösbar verbunden sein. Anschließend an das erste Wellenelement 10 schließt sich in Richtung zur zweiten Gelenkgabel 3 eine Sitzfläche 11 an, deren Gestaltung nachfolgend im Zusammenhang mit den Figuren 2 bis 7 noch näher erläutert wird.

Auf der Sitzfläche 7 ist eine Dichthülse 12 mit ihrem Befestigungsende 13 festgelegt. Das freie Ende der Dichthülse 12 trägt eine Dichtung 14, die zur Außenfläche des rohrförmigen ersten Wellenelementes 8 abdichtet. Die Verbindung zwischen der Dichthülse 12 und der Sitzfläche 11 wird nachfolgend anhand der Figur 2 näher erläutert, wobei hier eine erste Ausführungsform für die Verbindung zwischen der Dichthülse 12 und der Sitzfläche 11 dargestellt ist.

Die Sitzfläche 11 schließt sich an den mit der Verzahnung versehenen Teil des zweiten Wellenelementes 10 axial an und ist in Form einer kreiszylindrischen Sitzfläche verwirklicht. Im Anschluss an die Sitzfläche 11 ist eine Umfangsnut 16 vorgesehen, die kontinuierlich oder in Abschnitten um die Längsachse 6 herum vorgesehen sein kann. Die Sitzfläche 11 und die Umfangsnut 16 werden von dem Befestigungsende 13 der Dichthülse 12 überdeckt. Dargestellt ist die Dichthülse 12 mit gestrichelten Linien im Bereich des Befestigungsendes 13 mit ihrem aus Übermaß verformten Befestigungsabschnitt 15, so dass praktisch eine durchgehende kreiszylindrische Bohrung 17 gegbildet ist, die erlaubt, dass das Befestigungsende auf die Sitzfläche 11 aufgeschoben und zur Anlage an eine Schulter im Anschluss an die Umfangsnut 16 geschoben ist. Die Dichthülse 12 besteht aus einem Kunststoff mit Formgedächtnis, der dann, wenn der Befestigungsabschnitt 15 einer Wärmebehandlung unterworfen wird, in diesem Befestigungsabschnitt 15 seinen ursprünglichen Fertigungszustand einnimmt, in dem er die Umfangsnut 16 ausfüllt. Dieser Zustand wird zunächst durch Formgebung der rohrförmigen Dichthülse 12 erzeugt. Sodann erfolgt ein Aufweiten im Bereich des Befestigungsabschnittes 15 und gegebenenfalls im Bereich des Bohrungsabschnittes der Bohrung 17, der auf der Sitzfläche 11 sitzt, so das die Dichthülse 12 mit ihrem Befestigungsende voll über die Sitzfläche 11 geschoben werden kann. Von Vorteil ist insbesondere, dass keinerlei spanabhebende Bearbeitung stattfindet und die Montage sowie Festlegung durch Wärmeeinwirkung äußerst einfach und auch in einem Serienherstellprozess einfach zu verwirklichen ist.

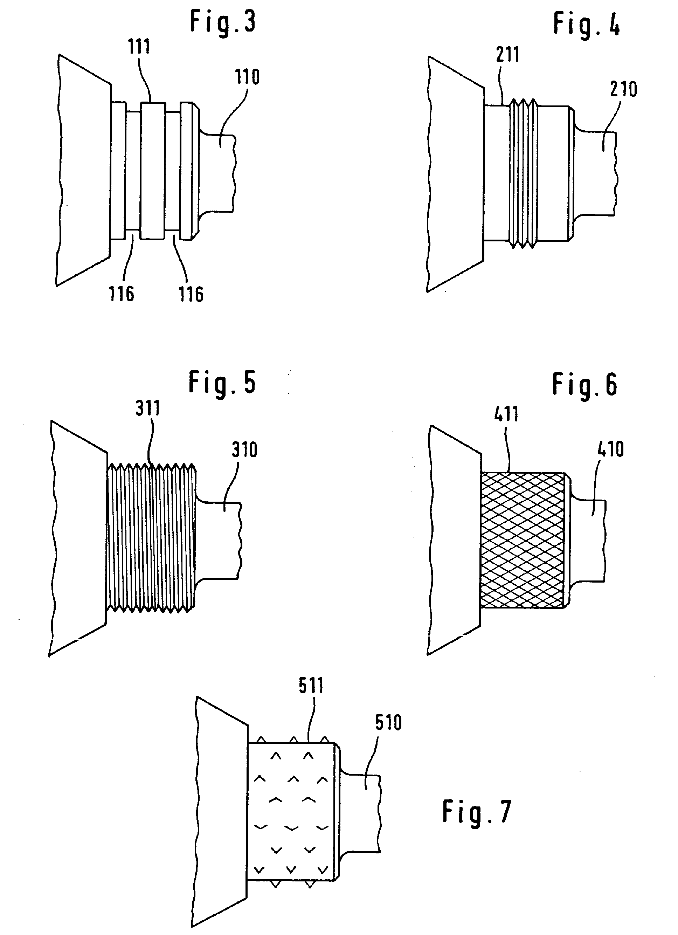

Die Figuren 3 bis 7 stellen verschiedene Ausgestaltungsmöglichkeiten für die Herstellung der Verbindung zwischen dem Befestigungsende der Dichthülse und der Sitzfläche bzw. dem zweiten Wellenelement 110, 210, 310, 410, 510 dar. So weist beim Ausführungsbeispiel gemäß Figur 3 die Sitzfläche 111 zwei Umfangsnuten 116 auf, so dass zwei Befestigungsabschnitte vorgesehen sind, die innerhalb der axialen Ausdehnung der Sitzfläche 111 entlang der Längsachse angeordnet sind.

Bei der Ausführungsform gemäß Figur 4 ist die Sitzfläche 211 des zweiten Wellenelementes 210 mit einer Anzahl von Ringnuten um die Längsachse versehen, die im Querschnitt dreieckig verlaufen, so dass sich Spitzen zwischen den aufeinanderfolgenden Nuten ergeben. Die Dichthülse wird mit ihrem Befestigungsende über den mit Ringnuten versehenen Abschnitt der Sitzfläche 211 geschoben. Nach Veranlassung der Rückkehr in die Ursprungsform wird eine innige Verbindung zwischen der Bohrung der Dichthülse und der mit Rillen versehenen Sitzfläche 211 erzielt.

Die Ausführungsform gemäß Figur 5 unterscheidet sich von der gemäß Figur 4 dadurch, dass die Sitzfläche 311 des zweiten Wellenelementes 310 mit einem Gewinde, insbesondere Feingewinde, versehen ist, an welches sich die Dichthülse mit ihrem Befestigungsabschnitt, der dem Befestigungsende entspricht, nach Formrückkehr eng anlegt, so dass ein inniger Reibschluss erzielt wird.

Bei der Ausführungsform gemäß Figur 6 ist die Sitzfläche 411 des zweiten Wellenelementes 410 mit einer Rändelung versehen. Bei der Ausführungsform gemäß Figur 7 ist die Sitzfläche 511 des zweiten Wellenelementes 510 mit Einkerbungen versehen, die dazu dienen, die drehfeste Verbindung zu der Dichthülse herzustellen.

Bei allen Ausgestaltungen gemäß Figuren 3 bis 7 kann der Befestigungsabschnitt der Dichthülse längenmäßig dem Befestigungsende derselben entsprechen. Zunächst wird die Dichthülse mit einem Bohrungsdurchmesser hergestellt, der dem gewünschten Festsitz auf der Sitzfläche entspricht. Danach erfolgt eine Aufweitung spanlos. Nach der Wärmeeinwirkung im montierten Zustand nimmt die Bohrung im wesentlichen ihren ursprünglichen Durchmesser an und presst sich an die Sitzfläche des zweiten Wellenelementes an.

Von Vorteil ist, dass die Dichthülse aus Kunststoff einfach austauschbar ist, da kein Schweißen erforderlich ist oder kein Verformungsprozess erforderlich ist, der für die Montage auszuführen ist. Darüber hinaus ist das Anbringen von Wuchtgewichten durch Kleben möglich, was entsprechend einfach ist. Darüber hinaus ist die Herstellung von einem Rohr ausgehend günstig.

### Bezugszeichenliste

- 1: erstes Kreuzgelenk
- 2: erste Gelenkgabel
- 3: zweite Gelenkgabel
- 4: Zapfenkreuz
- 5: zweites Kreuzgelenk
- 6: Längsachse
- 7: Längenausgleich
- 8: erstes Wellenelement
- 9: Verbindungsrohr
- 10, 110, 210, 310, 410, 510,: zweites Wellenelement
- 11, 111, 211, 311, 411, 511: Sitzfläche
- 12: Dichthülse
- 13: Befestigungsende
- 14: Dichtung
- 15: Befestigungsabschnitt
- 16, 116: Umfangsnut

## Patentansprüche

1. Abdichtanordnung eines Längenausgleichs (7) einer Kreuzgelenkwelle, welche ein rohrförmiges erstes Wellenelement (8) und ein zweites Wellenelement (10, 110, 210, 310, 410, 510), das im ersten Wellenelement (8) drehfest und entlang einer Längsachse (6) verstellbar aufgenommen ist, aufweist, wobei an eines der beiden Wellenelemente eine Sitzfläche (11, 111, 211, 311, 411, 511) angeschlossen ist, die auf der Längsachse (6) zentriert ist und eine innen zylindrische Dichthülse (12), die auf der Sitzfläche (211, 311, 411, 511) aufgenommen ist, und Befestigungsmittel zur Fixierung der Dichthülse (12) an dem die Sitzfläche (211, 311, 411, 511) aufweisenden Wellenelement vorgesehen sind,
**dadurch gekennzeichnet,**
**dass** die Befestigungsmittel mindestens eine im Bereich der Sitzfläche oder anschließend an diese angeordnete Umfangsnut (16, 116), die um die Längsachse (6) angeordnet ist und/oder eine an der Sitzfläche (211, 311, 411, 511) vorgesehene rauhe Oberfläche umfassen,
**dass** die innen zylindrische Dichthülse (12) aus einem Kunststoff mit Formgedächtnis besteht, die ein Befestigungsende (13) aufweist, mit dem sie auf der Sitzfläche (11, 111, 211, 311, 411, 511) aufgenommen ist und dass die Dichthülse (12) eine nach innen auf die Längsachse (6) verformbaren Befestigungsabschnitt (15) aufweist, der in die Umfangsnut (16, 116) eingreifend oder einen Reibschluss mit der eine rauhe Oberfläche aufweisenden Sitzfläche (211, 311, 411, 511) erzeugend verformt ist.

2. Abdichtanordnung nach Anspruch 1,
**dadurch gekennzeichnet,**
**dass** die Dichthülse (12) auf Endmaß gefertigt ist und deren Befestigungsabschnitt (15) vor deren Montage spanlos auf ein Übermaß gebracht ist.

3. Abdichtanordnung nach Anspruch 1,
**dadurch gekennzeichnet,**
**dass** die rauhe Oberfläche im Bereich der Sitzfläche (211, 311, 411, 511) durch Rillen, Kerben, ein Gewinde oder eine Rändelung dargestellt ist.

4. Abdichtanordnung nach Anspruch 1,
**dadurch gekennzeichnet,**
**dass** der Befestigungsabschnitt (15) mittels Wärmeeinwirkung auf seinen ursprünglichen Fertigungszustand gebracht ist.

5. Abdichtanordnung nach Anspruch 1,
**dadurch gekennzeichnet,**
**dass** als Kunststoff mit Formgedächtnis ein Polymer vorgesehen ist.

6. Verfahren zur Herstellung einer Abdichtanordnung gemäß einem der Ansprüche 1 bis 5,
**dadurch gekennzeichnet,**
**dass** eine Dichthülse aus einem Kunststoff mit Formgedächtnis auf Endmaß hergestellt wird, dass danach der Befestigungsabschnitt spanlos auf Übermaß gebracht wird, so dass danach die Dichthülse mit ihrem Befestigungsende auf die Sitzfläche geschoben und anschließend der Befestigungsabschnitt einer Wärmebehandlung unterworfen wird.

7. Verfahren nach Anspruch 6,
**dadurch gekennzeichnet,**
**dass** die Wärmebehandlung durch Einwirken von Licht, Ultraschall oder durch einen Induktor erfolgt.
